# EUROPÄISCHE PATENTSCHRIFT

(11) **EP 4 095 203 B1**
(45) Veröffentlichungstag und Bekanntmachung des Hinweises auf die Patenterteilung: **25.12.2024**
(21) Anmeldenummer: 21175632.5
(22) Anmeldetag: 25.05.2021
(51) Int. Cl.: C09D 7/46

(54) **VERWENDUNG EINES WÄSSRIGEN SYSTEMS ZUR APPLIKATION AUF EINER NICHT AUSGEHÄRTETEN KLEBER-, PUTZ- ODER SPACHTELSCHICHT, DAS WÄSSRIGE SYSTEM, KIT-OF-PARTS UMFASSEND DAS WÄSSRIGE SYSTEM UND VERFAHREN ZUR OFFENZEITVERLÄNGERUNG VON NICHT AUSGEHÄRTETEN KLEBER-, PUTZ- ODER SPACHTELSCHICHTEN**
USE OF AN AQUEOUS SYSTEM FOR APPLICATION TO AN UNCURED ADHESIVE, PLASTER OR FILLER COAT, THE AQUEOUS SYSTEM, KIT OF PARTS COMPRISING THE AQUEOUS SYSTEM AND METHOD FOR INCREASING THE OFFSET OF UNCURED ADHESIVE, PLASTER OR FILLER LAYERS
UTILISATION D'UN SYSTÈME AQUEUX DESTINÉ À L'APPLICATION SUR UNE COUCHE NON DURE D'ADHÉSIF, DE PLÂTRE OU DE MATIÈRE DE MASTICAGE, SYSTÈME AQUEUX, ENSEMBLE DE PIÈCES COMPRENANT LEDIT SYSTÈME AQUEUX ET PROCÉDÉ DE PROLONGATION DE TEMPS OUVERT DES COUCHES NON DURES D'ADHÉSIF, DE PLÂTRE OU DE MATIÈRE DE MASTICAGE

(43) Veröffentlichungstag der Anmeldung: 30.11.2022
(73) Patentinhaber: DAW SE, 64372 Ober-Ramstadt (DE)
(72) Erfinder: HURNAUS, Thomas, 84550 Feichten (DE); TIMM, Jan-Eric, 99817 Eisenach (DE); RUPPRECHT, Daniel, 99834 Gerstungen (DE); SCHÖßE, Klaus, 63208 Wildesck-Bosserode (DE)
(74) Vertreter: Metten, Karl-Heinz

(56) Entgegenhaltungen:
- WO-A1-2011/009874
- WO-A1-2012/087920
- WO-A1-2021/006233
- DE-A1- 19 717 936

## Beschreibung

Die vorliegende Erfindung betrifft die Verwendung eines wässrigen Systems enthaltend einen Offenzeitverlängerer zur Applikation auf einer nicht ausgehärteten Kleber-, Putz- oder Spachtelschicht. Schließlich betrifft die Erfindung ein Verfahren zur Offenzeitverlängerung von nicht ausgehärteten Kleber-, Putz- oder Spachtelschichten.

Die Applikation von Putz- und Spachtelmassen wie auch die damit einhergehenden Anforderungen und Problemstellungen sind dem Fachmann seit sehr langer Zeit geläufig.

Die DE 197 17 936 A1 offenbart die Verwendung von Alkoholen als Zusatzstoffe (Additive) für Putze und/oder Mörtel. Diese Additive liegen in pulverförmiger Darreichungsform vor, wobei die Alkohole auf einen festen Träger aufgezogen sind und wobei die Alkohole 8 bis 72 C-Atome pro Molekül enthalten. Putze und/oder Mörtel, die diese Additive umfassen, sollen eine verlängerte Antrocknungszeit aufweisen.

Die WO 2011/009874 stellt ab auf die Verwendung einer wässrigen Polymerdispersion enthaltend wenigstens ein, durch radikalische Emulsionspolymerisation wenigstens eines ethylenisch ungesättigten Monomers und 20 bis 75 Gew.-% tert. Butyl(meth)acrylat, erhältliches Polymer, als Bindemittel in bauchemischen Produkten. Solche Bindemittel sollen sich für das Verkleben von Warmedämmplatten, beispielsweise auf Basis von StyrolPolymerisaten sowie von Glasschaumplatten und Korkplatten, Schaumsilikatdämmplatten, Polyurethanhartschaumplatten und mineralischen Faserdämmstoffen, wie Steinwolle, eignen.

Die WO 2012/087920 A1 wiederum stellt ab auf einen Offenzeitverlängerer, der geeignet sein soll, einer Bautenanstrichzusammensetzung beigemischt zu werden, um die offene Zeit der Baubeschichtungszusammensetzung zu verlängern, wobei der Öffnungszeitverlängerer neutralisierte wasserlösliche Polymere, die aus hydrophilen, hydrophoben und vernetzenden Monomeren bestehen, umfasst. Ferner ist das vernetzende Monomer so ausgewählt, dass es mit dem Offenzeitverlängerer, einem anderen Offenzeitverlängerer mit einem vernetzbaren Monomer oder der Bautenanstrichzusammensetzung vernetzbar ist. Der Offenzeitverlängerer umfasst ferner mindestens ein Vernetzungsmittel und Wasser. Der Gesamtfeststoffgehalt des Offenzeitverlängerers beträgt dabei weniger als etwa 20 Gew.-%. Der wasserlösliche Offenzeitverlängerer kann als Additiv zur Verlängerung der Offenzeit von wässrigen Beschichtungen verwendet werden und den Verlauf und die Gleichmäßigkeit der Beschichtung verbessern. Nach dem Trocknen soll der wasserlösliche Offenzeitverlängerer weiter mit der wässrigen Beschichtung vernetzen, so dass die Trockenfilmeigenschaften der wässrigen Beschichtung erhalten bleiben.

Die WO 2021/006233 A1 offenbart eine wässrige Emulsion, enthaltend ein EthylenVinylalkohol-Copolymer als Dispergiermittel und ein Polymer, das eine ethylenisch ungesättigte Monomereinheit enthält. Der Gehalt an Ethyleneinheiten im Dispergiermittel beträgt 1 mol-% oder mehr und weniger als 20 mol-%. Der Blockcharakter der Ethyleneinheiten beträgt 0,90 bis 0,99. Die wässrige Emulsion soll bei niedrigen Temperaturen stabil sein und eine hohe Wasserbeständigkeit aufweisen.

Je nach den Bedingungen, z.B. bei hohen Außentemperaturen, starker Windlast oder bei Sonnenstrahlung tritt das Wasser relativ schnell aus der Putz- oder Spachtelmasse aus, womit insbesondere auch eine schnelle Hautbildung gegebenenfalls gepaart mit einer raschen oberflächennahen Aushärtung einhergeht. Dies kann insbesondere bei der Anfertigung großflächiger Putzbeschichtungen problematisch sein, da die Zeitspanne, die nach der Applikation der Putzmasse für ein fachgerechtes Strukturieren bzw. Glätten verbleibt, relativ kurz ist. Vielfach beträgt bei Temperaturen oberhalb von 20 °C die Zeit zwischen der Applikation und dem Strukturieren bzw. Glätten einer Putzmasse nicht mehr als fünf Minuten, um noch ein akzeptables Strukturbild zu erhalten. Dies erfordert ein zeitlich eng aufeinander abgestimmtes Vorgehen, denn ansonsten wird die Putzmasse hinreichend fest, bevor mit dem Strukturierschritt begonnen werden kann. Bedingt durch die schnelle Hautbildung bzw. die rasche oberflächennahe Aushärtung hat die Strukturierung bzw. das Glätten vielfach unter großem Zeitdruck zu geschehen, womit die Fehleranfälligkeit steigt. Um dennoch zu einem zufriedenstellenden, beanstandungsfreien Ergebnis zu gelangen, ist mitunter auf einer Baustelle die Anzahl an Arbeitskräften zu erhöhen. Und trocknet eine applizierte Putzmasse zu schnell, z.B. bei hohen Außentemperaturen, kann hiermit auch die Bildung von Rissen oder Poren einhergehen. Hierdurch werden Putzbeschichtungen häufig verwitterungsanfälliger.

Um die schnelle Hautbildung bzw. die rasche oberflächennahe Aushärtung von Putzmassen zu verlangsamen bzw. um die sogenannte Offenzeit zu erhöhen, ist gemäß der WO 98/49114 A1 bei der Herstellung von Putzmassen ein pulverförmiges Additiv mit einzuarbeiten, bei dem es sich um auf festen Träger aufgezogene C₈- bis C₇₂-Alkohole zu handeln hat. Diese Vorgehensweise bringt jedoch zwangsläufig mit sich, dass mindestens zwei Putzrezepturen werksseitig gefertigt und bevorratet werden müssen. Denn, wie vorangehend geschildert, tritt eine beschleunigte Hautbildung bzw. ein zu rasches oberflächennahes Aushärten nur unter bestimmten Witterungsbedingungen verstärkt auf. Häufig ist zudem die Offenzeitverlängerung, die sich durch Einarbeitung der genannten Additive erzielen lässt, sehr begrenzt, so dass kein merklicher Bearbeitungsvorteil resultiert. Auch ist man bestrebt, die Menge an üblicherweise nicht essentiellen Putzmassenadditiven möglichst gering zu halten, um nicht Qualitätseinbußen an anderer Stelle über sogenannte Verdünnungseffekte in Kauf nehmen zu müssen. Somit kann die Offenzeit in der Regel nicht durch verstärkte Einarbeitung der genannten Additive weitergehend verlängert werden.

Daher lag der vorliegenden Erfindung die Aufgabe zu Grunde, Putzmassen zur Verfügung zu stellen, die nicht mehr mit den geschilderten Nachteilen des Stands der Technik behaftet sind. Insbesondere lag der Erfindung die Aufgabe zu Grunde, nach der Applikation von Putzmassen, insbesondere auch auf großen Flächen, hinreichend Zeit für den Strukturier- bzw. Glättungsschritt zur Verfügung zu haben, und zwar auch bei hohen Temperaturen, z.B. oberhalb von 20 °C, bei Windlast und/oder bei Sonneneinstrahlung.

Demzufolge wurde die Verwendung eines wässrigen Systems enthaltend mindestens einen Offenzeitverlängerer für Klebermassen, Putzmassen, insbesondere für Ober- oder Unterputze, und/oder Spachtelmassen oder eines bei 20 °C flüssigen Offenzeitverlängerers für Klebermassen, Putzmassen, insbesondere für Ober- oder Unterputze, und/oder Spachtelmassen, umfassend mindestens einen C₁₂- bis C₂₄-Fettalkohol, Glycerin, Isopropylidenglycerin, Stearate, Paraffinwachse, Polyolefinwachse, insbesondere Polyethylen- und/oder Polypropylenwachse, Propylenglykol, Butylglyol, Dipropylenglykol, Butyldiglykol und/oder Polyvinylalkohole, zur Applikation in Tropfenform, bevorzugt zur Sprühapplikation, auf einer, insbesondere auf einer Gebäudefläche aufgetragenen, nicht ausgehärteten Kleber-, Putz- oder Spachtelschicht gefunden, wobei der mindestens eine Offenzeitverlängerer in dem wässrigen System gelöst, dispergiert oder emulgiert vorliegt. Insbesondere wird die der Erfindung zugrunde liegende Aufgabe gelöst durch die Verwendung eines wässrigen Systems enthaltend mindestens einen Offenzeitverlängerer für Putzmassen oder Spachtelmassen zur Applikation in Tropfenform, bevorzugt zur Sprühapplikation, auf einer auf einer Gebäudefläche aufgetragenen, nicht ausgehärteten Putz- oder Spachtelschicht.

Das wässrige System enthaltend den Offenzeitverlängerer oder der bei 20 °C flüssige Offenzeitverlängerer, insbesondere das wässrige System enthaltend den Offenzeitverlängerer, wird in besonders geeigneter Weise auf eine noch nicht ausgehärtete Kleber-, Putz- oder Spachtelmasse, vorzugsweise im Wesentlichen unmittelbar nach deren Applikation auf einer Substratfläche, insbesondere Gebäudefläche, aufgetreufelt oder, was besonders bevorzugt ist, aufgesprüht. Für die Sprühapplikation kann man auf alle gängigen manuell oder maschinell betriebenen Sprühvorrichtungen zurückgreifen. Die Sprühapplikation ist vorzugsweise in einer Weise vorzunehmen, dass ein gleichförmiger Sprühnebel auf die noch nicht ausgehärtete Kleber-, Putz- oder Spachtelmasse aufgebracht wird.

Für die erfindungsgemäße Verwendung wird unter den geeigneten Offenzeitverlängerern bevorzugt zurückgegriffen auf lineare C₁₂- bis C₂₄-Fettalkohole, insbesondere lineare C₁₄-, C₁₆- und/oder Cis-Fettalkohole. Alternativ oder zusätzlich stellen die Stearate Kaliumstearat dar.

Der Offenzeitverlängerer liegt in dem wässrigen System in gelöster, dispergierter oder emulgierter Form vor, und insbesondere zwar sowohl als Haupt- wie auch als Mindermenge, d.h. in einer Menge kleiner 50 Gewichtsprozent, bezogen auf das Gesamtgewicht des wässrigen Systems. Bevorzugt liegt der Offenzeitverlängerer in dem wässrigen System als Mindermenge vor. Ist der Offenzeitverlängerer in dem wässrigen System emulgiert oder dispergiert, liegen die Offenzeitverlängerertröpfchen bzw. Offenzeitverlängererpartikel bevorzugt homogen verteilt in dem wässrigen System vor. Das wässrige System kann dabei in einer Ausführungsform gleichzeitig auch emulgierte und dispergierte Offenzeitverlängerer nebeneinander enthalten.

Der Offenzeitverlängerer liegt in dem wässrigen System geeigneter Weise in einer Konzentration im Bereich von 1 Gew.-% bis 40 Gew.-% vor, bevorzugt im Bereich von 3 Gew.-% bis 30 Gew.-% und besonders bevorzugt im Bereich von 4 Gew.-% bis 20 Gew.-%, jeweils bezogen auf das Gesamtgewicht des wässrigen Systems. Insbesondere wenn der Offenzeitverlängerer in den vorangehend genannten Konzentrationsbereichen im wässrigen System vorliegt, stellen sich zufriedenstellend verlängerte Offenzeiten bei Applikation von 10 ml bis 250 ml, bevorzugt 20 ml bis 200 ml und besonders bevorzugt 50 ml bis 150 ml des wässrigen Systems enthaltend den mindestens einen Offenzeitverlängerer auf die nicht ausgehärtete Kleber-, Putz- oder Spachtelbeschichtung mit einer Fläche im Bereich von 0,20 bis 2,5 m² ein, bevorzugt im Bereich von 0,30 bis 2,0 m² und besonders bevorzugt im Bereich von 0,50 bis 1,5 m². Sehr zufriedenstellend verlängerte Offenzeiten stellen sich insbesondere ein bei Applikation von 50 ml bis 150 ml des wässrigen Systems enthaltend den mindestens einen Offenzeitverlängerer in einer Konzentration im Bereich von 4 Gew.-% bis 20 Gew.-%, insbesondere 5 bis 15, jeweils bezogen auf das Gesamtgewicht des wässrigen Systems, auf eine nicht ausgehärtete Kleber-, Putz- oder Spachtelbeschichtung mit einer Fläche im Bereich von 0,50 bis 1,5 m².

Bei der nicht ausgehärteten Putzschicht kann es sich um eine nicht ausgehärtete Kalkputz-, Kalkzementputz-, Zementputz-, Gipsputz-, Lehmputz-, Silikatputz-, Siliconharzputz- oder Dispersionsputzschicht handeln. Für die erfindungsgemäße Verwendung eignen sich insbesondere nicht ausgehärtete Siliconharzputz- und Dispersionsputzschichten, wobei Siliconharzputzschichten besonders bevorzugt sind. Ferner kann es sich bei der Putzmasse um eine Kalkputz-, Kalkzementputz-, Zementputz-, Gipsputz-, Lehmputz-, Silikatputz-, Siliconharzputz- oder Dispersionsputzmasse, insbesondere Siliconharzputzmasse oder Dispersionsputzmasse und besonders bevorzugt Siliconharzputzmasse, handeln. Bei der nicht ausgehärteten Spachtelschicht kann es sich um eine nicht ausgehärtete Kalkspachtel-, Kalkzementspachtel-, Zementspachtel-, Gipsspachtel-, Lehmspachtel-, Silikatspachtel-, Siliconharzspachtel- oder Dispersionsspachtelschicht, insbesondere Siliconharzspachtelschicht oder Dispersionsspachtelschicht und besonders bevorzugt Siliconharzspachtelschicht, handeln. Entsprechend kann die Spachtelmasse eine Kalkspachtel-, Kalkzementspachtel-, Zementspachtel-, Gipsspachtel-, Lehmspachtel-, Silikatspachtel-, Siliconharzspachtel- oder Dispersionsspachtelmasse, insbesondere Siliconharzspachtelmasse oder Dispersionsspachtelmasse und besonders bevorzugt Siliconharzspachtelmasse, darstellen.

Eine nicht ausgehärtete Dispersionsputz- oder spachtelschicht enthält vorzugsweise mindestens ein polymeres Bindemittel ausgewählt aus der Gruppe, bestehend aus wässrigen (Meth)acrylat-Homopolymer/Siliciumdioxid-Hybrid-Dispersionen, wässrigen (Meth)-acrylat-Copolymer/Siliciumdioxid-Hybrid-Dispersionen, wässrigen (Meth)acrylat/(Meth)-acrylsäure-Copolymer/ Siliciumdioxid-Hybrid-Dispersionen, wässrigen Organosilikat-Hybridbindemittel-Dispersionen, wässrigen Dispersionen enthaltend (Meth)acrylat-Homopolymere, wässrigen Dispersionen enthaltend (Meth)acrylat-Copolymere, wässrigen Dispersionen enthaltend Vinylacetat-Copolymere, insbesondere Vinylacetat/EthylenCopolymere, wässrigen Dispersionen enthaltend Vinylchlorid/Ethylen-Copolymere, insbesondere Vinylchlorid/Ethylen/Vinylester-Copolymere, z.B. Vinylchlorid/Ethylen/Vinylacetat-Copolymere, und/oder Vinylchlorid/Ethylen/Vinylester/Acrylat-Copolymere, z.B. Vinylchlorid/Ethylen/Vinylacetat/Acrylat-Copolymere, wässrigen Dispersionen enthaltend Vinylaromat/Acrylat-Copolymere, insbesondere Styrol/Acrylat-Copolymere, und deren beliebige Mischungen. Neben dem vorangehend spezifizierten polymeren Bindemittel kann die nicht ausgehärtete Dispersionsputz- oder -spachtelschicht als Co-Bindemittel auch mindestens einen Siliconharz enthalten. Eine nicht ausgehärtete Siliconharzputz- oder - spachtelschicht enthält vorzugsweise als Bindemittel oder als Co-Bindemittel mindestens einen Siliconharz. Ferner enthält eine nicht ausgehärtete Zementputz- oder - spachtelschicht als Bindemittel vorzugsweise mindestens einen Zement gemäß DIN EN 197-1:2011-11. Für eine nicht ausgehärtete Silikatputz- oder -spachtelschicht kann als Bindemittel auf Wasserglas und/oder Kieselsol zurückgegriffen werden.

Das wässrige System enthaltend den mindestens einen Offenzeitverlängerer oder der mindestens eine bei 20 °C flüssige Offenzeitverlängerer kann in einer Ausführungsform direkt nach dem Aufbringen der Kleber-, Putz- oder Spachtelmasse unter Ausbildung einer entsprechenden Beschichtung auf Letztere aufgebracht, insbesondere aufgesprüht werden. In einer weiteren Ausführungsform kann das wässrige System enthaltend den mindestens einen Offenzeitverlängerer oder der mindestens eine bei 20 °C flüssige Offenzeitverlängerer auch erst nach dem Abglätten der nicht ausgehärteten Kleber-, Putz- oder der Spachtelmassenbeschichtung auf diese appliziert werden. Auf diese Weise verbleibt regelmäßig noch stets genügend Zeit, um die noch nicht ausgehärtete Kleber-, Putz- oder Spachtelmassenbeschichtung mit geeigneten Werkzeugen zu strukturieren.

Im Sinne der vorliegenden Erfindung verfügen geeignete Putz- und Spachtelmassen über mindestens ein polymeres organisches Bindemittel, mindestens ein Rheologieadditiv, insbesondere einen Verdicker, mindestens ein Dispergiermittel, mindestens einen Füllstoff und mindestens ein Additiv sowie gegebenenfalls mindestens ein Pigment und/oder mindestens ein Körnungsmaterial.

Schließlich wird die der Erfindung zugrunde liegende Aufgabe gelöst durch ein Verfahren zur Offenzeitverlängerung von nicht ausgehärteten Kleber-, Putz- oder Spachtelschichten, umfassend die Schritte
i) Zurverfügungstellung eines wässrigen Systems enthaltend mindestens einen Offenzeitverlängerer für Klebermassen, Putzmassen, insbesondere für Ober- oder Unterputze, und/oder Spachtelmassen oder mindestens einen bei 20 °C flüssigen Offenzeitverlängerer für Klebermassen, Putzmassen, insbesondere für Ober- oder Unterputze, und/oder Spachtelmassen, umfassend mindestens einen C12- bis C24-Fettalkohol, Glycerin, Isopropylidenglycerin, Stearate, Paraffinwachse, Polyolefinwachse, Propylenglykol, Butylglycol, Dipropylenglykol, Butyldiglykol und/oder Polyvinylalkohole, wobei der mindestens eine Offenzeitverlängerer in dem wässrigen System gelöst, dispergiert oder emulgiert vorliegt,
ii) Zurverfügungstellung mindestens einer aus einer Kleber-, Putz- oder Spachtelmasse gebildeten nicht ausgehärteten Kleber-, Putz- oder Spachtelschicht,
iii) Applikation des wässrigen Systems enthaltend den mindestens einen Offenzeitverlängerer oder des mindestens einen bei 20 °C flüssigen Offenzeitverlängerers, gemäß i) in Tropfenform bevorzugt mittels Sprühapplikation, auf die nicht ausgehärteten Kleber-, Putz- oder Spachtelschicht.

Hierbei sprüht man in einer bevorzugten Ausgestaltung das wässrige System enthaltend den mindestens einen Offenzeitverlängerer oder den mindestens einen bei 20 °C flüssigen Offenzeitverlängerer auf die nicht ausgehärtete Kleber-, Putz- oder Spachtelschicht auf.

Für das erfindungsgemäße Verfahren gelten die vorangehend für die erfindungsgemäße Verwendung spezifizierten allgemeinen und bevorzugten Angaben zum Offenzeitverlängerer sowie zur Putzmasse und zur Putzschicht in gleicher Weise.

In einer bevorzugten Ausführungsform des erfindungsgemäßen Verfahrens kann vorgesehen sein, dass der Offenzeitverlängerer mindestens einen linearen C₁₂- bis C₂₄-Fettalkohol undbevorzugt einen linearen C₁₄-, C₁₆- und/oder C₁₈-Fettalkohol und/oder Stearate umfasst oder darstellt. Bevorzugt wird hierbei auf lineare Fettalkohole zurückgegriffen.

Bei dem erfindungsgemäßen Verfahren kann insbesondere auf vorgesehen sein, dass der Offenzeitverlängerer in dem wässrigen System geeigneter Weise in einer Konzentration im Bereich von 1 Gew.-% bis 40 Gew.-% vorliegt, bevorzugt im Bereich von 3 Gew.-% bis 30 Gew.-% und besonders bevorzugt im Bereich von 4 Gew.-% bis 20 Gew.-%, jeweils bezogen auf das Gesamtgewicht des wässrigen Systems. Insbesondere wenn der Offenzeitverlängerer in den vorangehend genannten Konzentrationsbereichen im wässrigen System vorliegt, stellen sich zufriedenstellend verlängerte Offenzeiten im Rahmen des erfindungsgemäßen Verfahrens bei Applikation von 10 ml bis 250 ml, bevorzugt 20 ml bis 200 ml und besonders bevorzugt 50 ml bis 150 ml des wässrigen Systems enthaltend den mindestens einen Offenzeitverlängerer auf die nicht ausgehärtete Kleber-, Putz- oder Spachtelbeschichtung mit einer Fläche im Bereich von 0,20 bis 2,5 m² ein, bevorzugt im Bereich von 0,30 bis 2,0 m² und besonders bevorzugt im Bereich von 0,50 bis 1,5 m².

Bei der nicht ausgehärteten Putzschicht des erfindungsgemäßen Verfahrens kann es sich um eine nicht ausgehärtete Kalkputz-, Kalkzementputz-, Zementputz-, Gipsputz-, Lehmputz-, Silikatputz-, Siliconharzputz- oder Dispersionsputzschicht handeln. Für das erfindungsgemäßen Verfahren eignen sich insbesondere nicht ausgehärtete Siliconharzputz- und Dispersionsputzschichten, wobei Siliconharzputzschichten besonders bevorzugt sind. Ferner kann es sich bei der Putzmasse des erfindungsgemäßen Verfahrens um eine Kalkputz-, Kalkzementputz-, Zementputz-, Gipsputz-, Lehmputz-, Silikatputz-, Siliconharzputz- oder Dispersionsputzmasse, insbesondere Siliconharzputzmasse oder Dispersionsputzmasse und besonders bevorzugt Siliconharzputzmasse, handeln. Bei der nicht ausgehärteten Spachtelschicht des erfindungsgemäßen Verfahrens kann es sich um eine nicht ausgehärtete Kalkspachtel-, Kalkzementspachtel-, Zementspachtel-, Gipsspachtel-, Lehmspachtel-, Silikatspachtel-, Siliconharzspachtel- oder Dispersionsspachtelschicht, insbesondere Siliconharzspachtelschicht oder Dispersionsspachtelschicht und besonders bevorzugt Siliconharzspachtelschicht, handeln. Entsprechend kann die Spachtelmasse eine Kalkspachtel-, Kalkzementspachtel-, Zementspachtel-, Gipsspachtel-, Lehmspachtel-, Silikatspachtel-, Siliconharzspachtel- oder Dispersionsspachtelmasse, insbesondere Siliconharzspachtelmasse oder Dispersionsspachtelmasse und besonders bevorzugt Siliconharzspachtelmasse, darstellen.

Eine nicht ausgehärtete Dispersionsputz- oder -spachtelschicht des erfindungsgemäßen Verfahrens enthält vorzugsweise mindestens ein polymeres Bindemittel ausgewählt aus der Gruppe, bestehend aus wässrigen (Meth)acrylat-Homopolymer/Siliciumdioxid-Hybrid-Dispersionen, wässrigen (Meth)acrylat-Copolymer/ Siliciumdioxid-Hybrid-Dispersionen, wässrigen (Meth)acrylat/ (Meth)acrylsäure-Copolymer/ Siliciumdioxid-Hybrid-Dispersionen, wässrigen Organosilikat-Hybridbindemittel-Dispersionen, wässrigen Dispersionen enthaltend (Meth)acrylat-Homopolymere, wässrigen Dispersionen enthaltend (Meth)acrylat-Copolymere, wässrigen Dispersionen enthaltend Vinylacetat-Copolymere, insbesondere Vinylacetat/Ethylen-Copolymere, wässrigen Dispersionen enthaltend Vinylchlorid/Ethylen-Copolymere, insbesondere Vinylchlorid/Ethylen/Vinylester-Copolymere, z.B. Vinylchlorid/Ethylen/ Vinylacetat-Copolymere, und/oder Vinylchlorid/Ethylen/Vinylester/Acrylat-Copolymere, z.B. Vinylchlorid/Ethylen/Vinylacetat/Acrylat-Copolymere, wässrigen Dispersionen enthaltend Vinylaromat/Acrylat-Copolymere, insbesondere Styrol/Acrylat-Copolymere, und deren beliebige Mischungen. Neben dem vorangehend spezifizierten polymeren Bindemittel kann die nicht ausgehärtete Dispersionsputz- oder -spachtelschicht als Co-Bindemittel auch mindestens einen Siliconharz enthalten. Eine nicht ausgehärtete Siliconharzputz- oder -spachtelschicht des erfindungsgemäßen Verfahrens enthält vorzugsweise als Bindemittel oder als Co-Bindemittel mindestens einen Siliconharz. Ferner enthält eine nicht ausgehärtete Zementputz- oder - spachtelschicht des erfindungsgemäßen Verfahrens als Bindemittel vorzugsweise mindestens einen Zement gemäß DIN EN 197-1:2011-11. Für eine nicht ausgehärtete Silikatputz- oder -spachtelschicht des erfindungsgemäßen Verfahrens kann als Bindemittel auf Wasserglas und/oder Kieselsol zurückgegriffen werden.

Das wässrige System enthaltend den mindestens einen Offenzeitverlängerer oder der mindestens eine bei 20 °C flüssige Offenzeitverlängerer kann in einer Ausführungsform des erfindungsgemäßen Verfahrens direkt nach dem Aufbringen der Kleber-, Putz- oder Spachtelmasse unter Ausbildung einer entsprechenden Beschichtung auf Letztere aufgebracht, insbesondere aufgesprüht werden. In einer weiteren Ausführungsform kann das wässrige System enthaltend den mindestens einen Offenzeitverlängerer oder der mindestens eine bei 20 °C flüssige Offenzeitverlängerer auch erst nach dem Abglätten der nicht ausgehärteten Kleber-, Putz- oder der Spachtelmassenbeschichtung auf diese appliziert werden. Auf diese Weise verbleibt regelmäßig noch stets genügend Zeit, um die noch nicht ausgehärtete Kleber-, Putz- oder Spachtelmassenbeschichtung mit geeigneten Werkzeugen zu strukturieren.

Der vorliegenden Erfindung liegt die überraschende Erkenntnis zugrunde, dass sich durch das Aufsprühen eines wässrigen Systems enthaltend einen Offenzeitverlängerer die Offenzeit von Kleber-, Putz- und Spachtelmassen signifikant verlängern lässt, sodass auch größere Flächen selbst bei höheren Außentemperaturen, größerer Windlast und/oder verstärkter Sonneneinstrahlung sicher und fachgerecht geglättet bzw. strukturiert werden können. Interessanterweise stellt sich der erfindungsgemäße Effekt unabhängig davon ein, ob es sich um eine mineralische oder organische Kleber-, Putz- oder Spachtelmasse handelt oder auf welchem Untergrund diese Kleber-, Putz- oder Spachtelmasse appliziert wird. Mit der erfindungsgemäßen Verwendung gelingt es überdies, bei Applikation des wässrigen Systems enthaltend einen Offenzeitverlängerer, insbesondere mittels Besprühens, auf noch nicht ausgehärtete Putz- oder Spachtelmassenbeschichtungen selbst unter sommerlichen Bedingungen die Bildung von Rissen und Poren zu vermeiden. Die resultierenden Putz- und Spachtelmassenbeschichtungen sind weniger witterungsanfällig.

Auch hat sich überraschend gezeigt, dass sich bei Applikation, insbesondere mittels Aufsprühens, eines wässrigen Systems enthaltend den mindestens einen Offenzeitverlängerer, in Form eines linearen C₁₂- bis C₂₄-Fettalkohols und bevorzugt eines linearen C₁₄-, C₁₆- und/oder C₁₈-Fettalkohols, die Offenzeit von Kleber-, Putz- und Spachtelmassen um ein Vielfaches gegenüber unbehandelten Systemen verlängern lässt.

Ein weiterer überraschender Vorteil, der mit der vorliegenden Erfindung einhergeht, besteht darin, dass Übergänge zwischen aufeinanderfolgend applizierten Putz- oder Spachtelbeschichtungsmassen nicht erkennbar sind, auch nicht bei Applikation unter sommerlichen Bedingungen. Demgegenüber lassen sich bei gattungsgemäßer aufeinanderfolgender Anbringung solcher applizierten Putz- oder Spachtelbeschichtungsmassen sogenannte Gerüstlagen bzw. Nassstrukturübergänge häufig nicht vermeiden. Die Anknüpfung einer weiteren Putz- bzw. Spachtelmassenschicht an eine bereits bestehende Putz- bzw. Spachtelmassenschicht gelingt unter Beachtung der erfindungsgemäßen technischen Lehre regelmäßig völlig unproblematisch.

Insbesondere wurde auch gefunden, dass mit der Einarbeitung der gleichen Menge an Offenzeitverlängerer in eine Kleber-, Putz- oder Spachtelmasse zwar eine geringfügige Verlängerung der Offenzeit einherging, dass allerdings bei Applikation, insbesondere mittels Besprühens, der gleichen Menge an Kleber-, Putz- oder Spachtelmasse, wenn als frisch applizierte Beschichtung vorliegend, mit einem wässrigen System enthaltend die identische Menge an Offenzeitverlängerer sich eine um ein Vielfaches, beispielsweise um ein Zehnfaches verlängerte Offenzeit einstellte.

Die in der voranstehenden Beschreibung und den Ansprüchen offenbarten Merkmale der Erfindung können sowohl einzeln als auch in jeder beliebigen Kombination für die Verwirklichung der Erfindung in ihren verschiedenen Ausführungsformen wesentlich sein.

## Patentansprüche

1. Verwendung eines wässrigen Systems enthaltend mindestens einen Offenzeitverlängerer für Klebermassen, Putzmassen, insbesondere für Ober- oder Unterputze, und/oder Spachtelmassen oder eines bei 20 °C flüssigen Offenzeitverlängerers für Klebermassen, Putzmassen, insbesondere für Ober- oder Unterputze, und/oder Spachtelmassen, umfassend mindestens einen C₁₂- bis C₂₄-Fettalkohol, Glycerin, Isopropylidenglycerin, Stearate, Paraffinwachse, Polyolefinwachse, Propylenglykol, Butylglycol, Dipropylenglykol, Butyldiglycol und/oder Polyvinylalkohole, zur Applikation in Tropfenform, bevorzugt zur Sprühapplikation, auf einer nicht ausgehärteten Kleber-, Putz- oder Spachtelschicht, wobei der mindestens eine Offenzeitverlängerer in dem wässrigen System gelöst, dispergiert oder emulgiert vorliegt.

2. Verwendung nach Anspruch 1, **dadurch gekennzeichnet, dass** der C₁₂- bis C₂₄-Fettalkohol ein linearer C₁₂- bis C₂₄-Fettalkohol, insbesondere ein linearer C₁₄-, C₁₆- und/oder C₁₈-Fettalkohol ist oder dass die Stearate Kaliumstearat darstellen.

3. Verwendung nach Anspruch 1 oder 2, **dadurch gekennzeichnet, dass** der mindestens eine Offenzeitverlängerer in dem wässrigen System in einer Konzentration im Bereich von 1 Gew.-% bis 40 Gew.-%, bevorzugt im Bereich von 3 Gew.-% bis 30 Gew.-% und besonders bevorzugt im Bereich von 4 Gew.-% bis 20 Gew.-%, jeweils bezogen auf das Gesamtgewicht des wässrigen Systems, vorliegt.

4. Verwendung nach einem der vorangehenden Ansprüche, **dadurch gekennzeichnet, dass**
10 ml bis 250 ml, bevorzugt 20 ml bis 200 ml und besonders bevorzugt 50 ml bis 150 ml des wässrigen Systems enthaltend den mindestens einen Offenzeitverlängerer auf die nicht ausgehärtete Kleber-, Putz- oder Spachtelbeschichtung mit einer Fläche im Bereich von 0,20 bis 2,5 m², bevorzugt im Bereich von 0,30 bis 2,0 m² und besonders bevorzugt im Bereich von 0,50 bis 1,5 m² aufgebracht werden.

5. Verwendung nach einem der vorangehenden Ansprüche, **dadurch gekennzeichnet, dass**
die Putzmasse eine Kalkputz-, Kalkzementputz-, Zementputz-, Gipsputz-, Lehmputz-, Silikatputz-, Siliconharzputz- oder Dispersionsputzmasse, insbesondere Siliconharzputzmasse oder Dispersionsputzmasse und besonders bevorzugt Siliconharzputzmasse, darstellt oder dass
die Spachtelmasse eine Kalkspachtel-, Kalkzementspachtel-, Zementspachtel-, Gipsspachtel-, Lehmspachtel-, Silikatspachtel-, Siliconharzspachtel- oder Dispersionsspachtelmasse, insbesondere Siliconharzspachtelmasse oder Dispersionsspachtelmasse und besonders bevorzugt Siliconharzspachtelmasse, darstellt oder dass
die nicht ausgehärtete Putzschicht eine nicht ausgehärtete Kalkputz-, Kalkzementputz-, Zementputz-, Gipsputz-, Lehmputz-, Silikatputz-, Siliconharzputz- oder Dispersionsputzschicht, insbesondere Siliconharzputzschicht oder Dispersionsputzschicht und besonders bevorzugt Siliconharzputzschicht, ist oder dass
die nicht ausgehärtete Spachtelschicht eine nicht ausgehärtete Kalkspachtel-, Kalkzementspachtel-, Zementspachtel-, Gipsspachtel-, Lehmspachtel-, Silikatspachtel-, Siliconharzspachtel- oder Dispersionsspachtelschicht, insbesondere Siliconharzspachtelschicht oder Dispersionsspachtelschicht und besonders bevorzugt Siliconharzspachtelschicht, darstellt.

6. Verwendung nach Anspruch 5, **dadurch gekennzeichnet, dass** nicht ausgehärtete Dispersionsputz- oder -spachtelschicht mindestens ein polymeres Bindemittel ausgewählt aus der Gruppe, bestehend aus wässrigen (Meth)acrylat-Homopolymer/Siliciumdioxid-Hybrid-Dispersionen, wässrigen (Meth)acrylat-Copolymer/Siliciumdioxid-Hybrid-Dispersionen, wässrigen (Meth)acrylat/(Meth)acrylsäure-Copolymer/Siliciumdioxid-Hybrid-Dispersionen, wässrigen Organosilikat-Hybridbindemittel-Dispersionen, wässrigen Dispersionen enthaltend (Meth)acrylat-Homopolymere, wässrigen Dispersionen enthaltend (Meth)acrylat-Copolymere, wässrigen Dispersionen enthaltend Vinylacetat-Copolymere, insbesondere Vinylacetat/Ethylen-Copolymere, wässrige Dispersionen enthaltend Vinylchlorid/Ethylen-Copolymere, insbesondere Vinyl chlorid/Ethylen/Vinylester-Copolymere und/ oder Vinylchlorid/Ethylen/Vinylester/Acrylat-Copolymere, wässrigen Dispersionen enthaltend Vinylaromat/Acrylat-Copolymere, insbesondere Styrol/AcrylatCopolymere, und deren beliebige Mischungen, enthält oder
dass die nicht ausgehärtete Siliconharzputz- oder -spachtelschicht als Bindemittel mindestens einen Siliconharz enthält oder
dass die nicht ausgehärtete Zementputz- oder -spachtelschicht als Bindemittel mindestens einen Zement gemäß DIN EN 197-1:2011-11 enthält, oder dass die nicht ausgehärtete Silikatputzschicht als Bindemittel Wasserglas und/oder Kieselsol enthält.

7. Verwendung nach einem der vorangehenden Ansprüche, **dadurch gekennzeichnet, dass**
das wässrige System enthaltend den mindestens einen Offenzeitverlängerer oder der mindestens eine bei 20 °C flüssige Offenzeitverlängerer nach dem Abglätten der nicht ausgehärteten Kleber-, Putz- oder der Spachtelmassenbeschichtung auf diese appliziert wird.

8. Verfahren zur Offenzeitverlängerung von nicht ausgehärteten Kleber-, Putz- oder Spachtelschichten, umfassend die Schritte
i) Zurverfügungstellung eines wässrigen Systems enthaltend mindestens einen Offenzeitverlängerer für Klebermassen, Putzmassen, insbesondere für Ober- oder Unterputze, und/oder Spachtelmassen oder mindestens einen bei 20 °C flüssigen Offenzeitverlängerer für Klebermassen, Putzmassen, insbesondere für Ober- oder Unterputze, und/oder Spachtelmassen, umfassend mindestens einen C₁₂- bis C₂₄-Fettalkohol, Glycerin, Isopropylidenglycerin, Stearate, Paraffinwachse, Polyolefinwachse, Propylenglykol, Butylglycol, Dipropylenglykol, Butyldiglycol und/oder Polyvinylalkohole, wobei der mindestens eine Offenzeitverlängerer in dem wässrigen System gelöst, dispergiert oder emulgiert vorliegt,
ii) Zurverfügungstellung mindestens einer aus einer Kleber-, Putz- oder Spachtelmasse gebildeten nicht ausgehärteten Kleber-, Putz- oder Spachtelschicht,
iii) Applikation des wässrigen Systems enthaltend den mindestens einen Offenzeitverlängerer oder des mindestens einen bei 20 °C flüssigen Offenzeitverlängerers gemäß i) in Tropfenform, bevorzugt mittels Sprühapplikation, auf die nicht ausgehärtete Kleber-, Putz- oder Spachtelschicht.

9. Verfahren nach Anspruch 8, **dadurch gekennzeichnet, dass** man das wässrige System enthaltend den mindestens einen Offenzeitverlängerer oder den mindestens einen bei 20 °C flüssigen Offenzeitverlängerer auf die nicht ausgehärtete Kleber-, Putz- oder Spachtelschicht aufsprüht.

10. Verfahren nach Anspruch 8 oder 9, **gekennzeichnet durch** einen Offenzeitverlängerer nach Anspruch 3 und/oder durch ein wässriges System nach Anspruch 4 und/oder durch eine Putz- oder Spachtelmasse oder durch eine nicht ausgehärtete Putz- oder Spachtelschicht nach Anspruch 5 oder 6.

11. Verfahren nach einem der Ansprüche 8 bis 10, **dadurch gekennzeichnet, dass** das wässrige System enthaltend den mindestens einen Offenzeitverlängerer oder der mindestens eine bei 20 °C flüssige Offenzeitverlängerer nach dem Abglätten der nicht ausgehärteten Kleber-, Putz- oder der Spachtelmassenbeschichtung auf diese appliziert wird.

## Claims

1. Use of an aqueous system containing at least one open-time extender for adhesive compositions, plaster compositions, in particular for top- or undercoat plasters, and/or filler compositions or an open-time extender which is liquid at 20°C for adhesive compositions, plaster compositions, in particular for top- or undercoat plasters, and/or filler compositions, comprising at least one C₁₂ to C₂₄ fatty alcohol, glycerol, isopropylideneglycerol, stearates, paraffin waxes, polyolefin waxes, propylene glycol, butyl glycol, dipropylene glycol, butyl diglycol and/or polyvinyl alcohols, for application in drop form, preferably for spray application, to an uncured adhesive, plaster or filler layer, wherein the at least one open-time extender is present in dissolved, dispersed or emulsified form in the aqueous system.

2. Use according to Claim 1, **characterized in that**
the C₁₂ to C₂₄ fatty alcohol is a linear C₁₂ to C₂₄ fatty alcohol, in particular a linear C₁₄, C₁₆ and/or C₁₈ fatty alcohol, or **in that** the stearates are potassium stearate.

3. Use according to Claim 1 or 2, **characterized in that**
the at least one open-time extender is present in the aqueous system in a concentration in the range from 1% by weight to 40% by weight, preferably in the range from 3% by weight to 30% by weight and more preferably in the range from 4% by weight to 20% by weight, based in each case on the total weight of the aqueous system.

4. Use according to any of the preceding claims, **characterized in that**
10 ml to 250 ml, preferably 20 ml to 200 ml and more preferably 50 ml to 150 ml of the aqueous system containing the at least one open-time extender are applied to the uncured adhesive, plaster or filler coating with an area in the range from 0.20 to 2.5 m², preferably in the range from 0.30 to 2.0 m² and more preferably in the range from 0.50 to 1.5 m² .

5. Use according to any of the preceding claims, **characterized in that**
the plaster composition is a lime plaster, lime cement plaster, cement plaster, gypsum plaster, loam plaster, silicate plaster, silicone resin plaster or dispersion plaster composition, in particular silicone resin plaster or dispersion plaster composition and more preferably silicone resin plaster composition, or **in that** the filler composition is a lime filler, lime cement filler, cement filler, gypsum filler, loam filler, silicate filler, silicone resin filler or dispersion filler composition, in particular silicone resin filler or dispersion filler composition and more preferably silicone resin filler composition, or **in that**
the uncured plaster layer is an uncured lime plaster, lime cement plaster, cement plaster, gypsum plaster, loam plaster, silicate plaster, silicone resin plaster or dispersion plaster layer, in particular silicone resin plaster layer or dispersion plaster layer and more preferably silicone resin plaster layer, or **in that** the uncured filler layer is an uncured lime filler, lime cement filler, cement filler, gypsum filler, loam filler, silicate filler, silicone resin filler or dispersion filler layer, in particular silicone resin filler layer or dispersion filler layer and more preferably silicone resin filler layer.

6. Use according to Claim 5, **characterized in that**
uncured dispersion plaster or filler layer contains at least one polymeric binder selected from the group consisting of aqueous (meth)acrylate homopolymer/silicon dioxide hybrid dispersions, aqueous (meth)acrylate copolymer/silicon dioxide hybrid dispersions, aqueous (meth)acrylate/(meth)acrylic acid copolymer/silicon dioxide hybrid dispersions, aqueous organosilicate hybrid binder dispersions, aqueous dispersions containing (meth)acrylate homopolymers, aqueous dispersions containing (meth)acrylate copolymers, aqueous dispersions containing vinyl acetate copolymers, in particular vinyl acetate/ethylene copolymers, aqueous dispersions containing vinyl chloride/ethylene copolymers, in particular vinyl chloride/ethylene/vinyl ester copolymers and/or vinyl chloride/ethylene/vinyl ester/acrylate copolymers, aqueous dispersions containing vinylaromatic/acrylate copolymers, in particular styrene/acrylate copolymers, and any desired mixtures thereof, or
**in that** the uncured silicone resin plaster or filler layer contains at least one silicone resin as binder, or
**in that** the uncured cement plaster or filler layer contains at least one cement according to DIN EN 197-1:2011-11 as binder, or **in that** the uncured silicate plaster layer contains water glass and/or silica sol as binder.

7. Use according to any of the preceding claims, **characterized in that** the aqueous system containing the at least one open-time extender or the at least one open-time extender which is liquid at 20°C is applied to the uncured adhesive, plaster or filler coating after the latter has been smoothed.

8. Method for open-time extending uncured adhesive, plaster or filler layers, comprising the steps of
i) providing an aqueous system containing at least one open-time extender for adhesive compositions, plaster compositions, in particular for top- or undercoat plasters, and/or filler compositions or at least one open-time extender which is liquid at 20°C for adhesive compositions, plaster compositions, in particular for top- or undercoat plasters, and/or filler compositions, comprising at least one C₁₂ to C₂₄ fatty alcohol, glycerol, isopropylideneglycerol, stearates, paraffin waxes, polyolefin waxes, propylene glycol, butyl glycol, dipropylene glycol, butyl diglycol and/or polyvinyl alcohols, wherein the at least one open-time extender is present in dissolved, dispersed or emulsified form in the aqueous system,
ii) providing at least one uncured adhesive, plaster or filler layer formed from an adhesive, plaster or filler composition,
iii) applying the aqueous system containing the at least one open-time extender or the at least one open-time extender which is liquid at 20°C according to i) in drop form, preferably by means of spray application, to the uncured adhesive, plaster or filler layer.

9. Method according to Claim 8, **characterized in that**
the aqueous system containing the at least one open-time extender or the at least one open-time extender which is liquid at 20°C is sprayed onto the uncured adhesive, plaster or filler layer.

10. Method according to Claim 8 or 9, **characterized by**
an open-time extender according to Claim 3 and/or by an aqueous system according to Claim 4 and/or by a plaster or filler composition or by an uncured plaster or filler layer according to Claim 5 or 6.

11. Method according to any of Claims 8 to 10, **characterized in that**
the aqueous system containing the at least one open-time extender or the at least one open-time extender which is liquid at 20°C is applied to the uncured adhesive, plaster or filler coating after the latter has been smoothed.

## Revendications

1. Utilisation d'un système aqueux contenant au moins un prolongateur de temps d'ouverture pour des masses adhésives, des masses d'enduit, en particulier pour des enduits supérieurs ou inférieurs, et/ou des enduits de rebouchage ou un prolongateur de temps d'ouverture liquide à 20 °C pour des masses adhésives, des enduits, en particulier pour des enduits supérieurs ou inférieurs, et/ou des enduits de rebouchage, comprenant au moins un alcool gras en C₁₂ à C₂₄, de la glycérine, de l'isopropylidèneglycérine, des stéarates, des cires de paraffine, des cires de polyoléfine, du propylène glycol, du butylglycol, du dipropylène glycol, du butyldiglycol et/ou des alcools polyvinyliques, pour l'application sous forme de gouttes, de préférence pour l'application par pulvérisation, sur une couche adhésive, de enduit ou de enduit de rebouchage non durcie, l'au moins un prolongateur de temps d'ouverture se présentant sous forme dissoute, dispersée ou émulsifiée dans le système aqueux.

2. Utilisation selon la revendication 1, **caractérisée en ce que**
l'alcool gras en C₁₂ à C₂₄ est un alcool gras en C₁₂ à C₂₄ linéaire, en particulier un alcool gras en C₁₄, C₁₆ et/ou C₁₈ linéaire ou **en ce que** les stéarates représentent le stéarate de potassium.

3. Utilisation selon la revendication 1 ou 2, **caractérisée en ce que** l'au moins un prolongateur de temps d'ouverture se présente dans le système aqueux en une concentration dans la plage de 1 % en poids à 40 % en poids, de préférence dans la plage de 3 % en poids à 30 % en poids et de manière particulièrement préférée dans la plage de 4 % en poids à 20 % en poids, à chaque fois par rapport au poids total du système aqueux.

4. Utilisation selon l'une quelconque des revendications précédentes, **caractérisée en ce que**
10 ml à 250 ml, de préférence 20 ml à 200 ml et de manière particulièrement préférée 50 ml à 150 ml du système aqueux contenant l'au moins un prolongateur de temps d'ouverture sont appliqués sur le revêtement adhésif, d'enduit ou de enduit de rebouchage non durci avec une surface dans la plage de 0,20 à 2,5 m², de préférence dans la plage de 0,30 à 2,0 m² et de manière particulièrement préférée dans la plage de 0,50 à 1,5 m² .

5. Utilisation selon l'une quelconque des revendications précédentes, **caractérisée en ce que**
la masse d'enduit représente une masse d'enduit de chaux, d'enduit de ciment de chaux, d'enduit de ciment, d'enduit de plâtre, d'enduit d'argile, d'enduit de silicate, d'enduit de résine de silicone ou d'enduit de dispersion, en particulier une masse d'enduit de résine de silicone ou une masse d'enduit de dispersion et de manière particulièrement préférée une masse d'enduit de résine de silicone ou **en ce que** la masse d'enduit de rebouchage représente une masse d'enduit de rebouchage de chaux, d'enduit de rebouchage de ciment de chaux, d'enduit de rebouchage de ciment, d'enduit de rebouchage de plâtre, d'enduit de rebouchage d'argile, d'enduit de rebouchage de silicate, d'enduit de rebouchage de résine de silicone ou d'enduit de rebouchage de dispersion, en particulier une masse d'enduit de rebouchage de résine de silicone ou une masse d'enduit de rebouchage de dispersion et de manière particulièrement préférée une masse d'enduit de rebouchage de résine de silicone ou **en ce que**
la couche d'enduit non durcie est une couche d'enduit de chaux, d'enduit de ciment de chaux, d'enduit de plâtre, d'enduit d'argile, d'enduit de silicate, d'enduit de résine de silicone ou d'enduit de dispersion non durcie, en particulier une couche d'enduit de résine de silicone ou une couche d'enduit de dispersion et de manière particulièrement préférée une couche d'enduit de résine de silicone ou **en ce que** la couche d'enduit de rebouchage non durcie représente une couche d'enduit de rebouchage de chaux, d'enduit de rebouchage de ciment de chaux,
d'enduit de rebouchage de plâtre, d'enduit de rebouchage d'argile, d'enduit de rebouchage de silicate, d'enduit de rebouchage de résine de silicone ou
d'enduit de rebouchage de dispersion non durcie, en particulier une couche d'enduit de rebouchage de résine de silicone ou une couche d'enduit de rebouchage de dispersion et de manière particulièrement préférée une couche d'enduit de rebouchage de résine de silicone.

6. Utilisation selon la revendication 5, **caractérisée en ce que** la couche d'enduit ou d'enduit de rebouchage de dispersion non durcie contient au moins un liant polymère choisi dans le groupe constitué par les dispersions hybrides aqueuses d'homopolymère de (méth)acrylate/dioxyde de silicium, les dispersions hybrides aqueuses de copolymère de (méth)acrylate/dioxyde de silicium, les dispersions hybrides aqueuses de copolymère de (méth)acrylate/acide (méth)acrylique/dioxyde de silicium, les dispersions aqueuses de liant hybride d'organosilicate, les dispersions aqueuses contenant des homopolymères de (méth)acrylate, les dispersions aqueuses contenant des copolymères de (méth)acrylate, les dispersions aqueuses contenant des copolymères d'acétate de vinyle, en particulier des copolymères d'acétate de vinyle/éthylène, les dispersions aqueuses contenant des copolymères de chlorure de vinyle/éthylène, en particulier des copolymères de chlorure de vinyle/éthylène/ester de vinyle et/ou des copolymères de chlorure de vinyle/éthylène/ester de vinyle/acrylate, les dispersions aqueuses contenant des copolymères de composé aromatique de vinyle/acrylate, en particulier des copolymères de styrène/acrylate, et leurs mélanges quelconques ou
**en ce que** la couche d'enduit ou d'enduit de rebouchage de résine de silicone non durcie contient en tant que liant au moins une résine de silicone ou
**en ce que** la couche d'enduit ou d'enduit de rebouchage de ciment non durcie contient en tant que liant au moins un ciment selon DIN EN 197-1 :2011-11 ou **en ce que** la couche d'enduit de silicate non durcie contient en tant que liant du verre soluble et/ou du sol de silice.

7. Utilisation selon l'une quelconque des revendications précédentes, **caractérisée en ce que**
le système aqueux contenant l'au moins un prolongateur de temps d'ouverture ou l'au moins un prolongateur de temps d'ouverture liquide à 20 °C est appliqué sur le revêtement adhésif, d'enduit ou de enduit de rebouchage non durci après le lissage de celui-ci.

8. Procédé de prolongation de temps d'ouverture de couches adhésives, d'enduit ou d'enduit de rebouchage non durcies, comprenant les étapes
i) de mise à disposition d'un système aqueux contenant au moins un prolongateur de temps d'ouverture pour des masses adhésives, des masses d'enduit, en particulier pour des enduits supérieurs ou inférieurs, et/ou des enduits de rebouchage ou au moins un prolongateur de temps d'ouverture liquide à 20 °C pour des masses adhésives, des masses d'enduits, en particulier pour des enduits supérieurs ou inférieurs, et/ou des enduits de rebouchage, comprenant au moins un alcool gras en C₁₂ à C₂₄, de la glycérine, de l'isopropylidèneglycérine, des stéarates, des cires de paraffine, des cires de polyoléfine, du propylène glycol, du butylglycol, du dipropylène glycol, du butyldiglycol et/ou des alcools polyvinyliques, l'au moins un prolongateur de temps d'ouverture se présentant sous forme dissoute, dispersée ou émulsifiée dans le système aqueux,
ii) de mise à disposition d'au moins une couche adhésive, d'enduit ou d'enduit de rebouchage non durcie formée à partir d'une masse adhésive, d'enduit ou d'enduit de rebouchage,
iii) d'application du système aqueux contenant l'au moins un prolongateur de temps d'ouverture ou de l'au moins un prolongateur de temps d'ouverture liquide à 20 °C selon i) sous forme de gouttes, de préférence par application par pulvérisation, sur la couche adhésive, d'enduit ou d'enduit de rebouchage non durcie.

9. Procédé selon la revendication 8, **caractérisé en ce que**
le système aqueux contenant l'au moins un prolongateur de temps d'ouverture ou l'au moins un prolongateur de temps d'ouverture liquide à 20 °C est pulvérisé sur la couche adhésive, d'enduit ou d'enduit de rebouchage non durcie.

10. Procédé selon la revendication 8 ou 9, **caractérisé par**
un prolongateur de temps d'ouverture selon la revendication 3 et/ou par un système aqueux selon la revendication 4 et/ou par une masse d'enduit ou d'enduit de rebouchage ou par une couche d'enduit ou d'enduit de rebouchage non durcie selon la revendication 5 ou 6.

11. Procédé selon l'une quelconque des revendications 8 à 10, **caractérisé en ce que** le système aqueux contenant l'au moins un prolongateur de temps d'ouverture ou l'au moins un prolongateur de temps d'ouverture liquide à 20 °C est appliqué sur le revêtement adhésif, d'enduit ou d'enduit de rebouchage non durci après le lissage de celui-ci.
